# EUROPÄISCHE PATENTSCHRIFT

(11) **EP 3 661 725 B1**
(45) Veröffentlichungstag und Bekanntmachung des Hinweises auf die Patenterteilung: **19.01.2022**
(21) Anmeldenummer: 18750168.9
(22) Anmeldetag: 02.08.2018
(51) Int. Cl.: B29C 49/48, B29C 49/06, B29C 49/36, B29C 49/46, B29L 31/00

(54) **AUTOMATISCHER BLASFORMWECHSEL**
AUTOMATED CHANGING OF BLOW MOULDS
CHANGEMENT DE MOULE DE SOUFFLAGE AUTOMATIQUE

(30) Priorität: 02.08.2017 DE 102017117533; 02.08.2017 DE 102017117576; 29.08.2017 DE 102017119817; 29.08.2017 DE 102017119816; 12.12.2017 DE 102017129576
(43) Veröffentlichungstag der Anmeldung: 10.06.2020
(73) Patentinhaber: Krones AG, 93073 Neutraubling (DE)
(72) Erfinder: KIRCHBERGER, Beate, 93073 Neutraubling (DE)
(74) Vertreter: Bittner, Bernhard
(86) Internationale Anmeldenummer: PCT/EP2018/071004
(87) Internationale Veröffentlichungsnummer: WO 2019/025547

(56) Entgegenhaltungen:
- EP-A1- 2 703 146
- EP-A2- 2 292 405
- EP-B1- 2 292 405
- EP-B1- 2 703 146
- WO-A1-2005/025835
- DE-A1-102010 006 898

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt und weisen Blasformeinrichtungen auf, in denen die Kunststoffvorformlinge zu den Kunststoffbehältnissen unter anderem durch Beaufschlagung mit einem Medium expandiert werden. Typischerweise werden dabei nicht nur die Kunststoffvorformlinge, bevor sie in die Blasformeinrichtungen eingebracht werden, sondern auch die Blasformeinrichtungen selbst temperiert, um die je nach Prozessart erforderlichen Rahmenbedingungen zu bieten. Bei manchen Prozessarten, etwa beim Umformen von Kunststoffvorformlingen zu Behältern, welche anschließend mit heißem Medium befüllt werden, sind Formentemperaturen zwischen 70 und 160°C notwendig.

Aus den Vorrichtungen und Verfahren, die derzeit aus dem Stand der Technik bekannt sind, werden Blasformen typischerweise mit flüssigen Medien wie Wasser oder Öl temperiert. Dabei ergibt sich der Nachteil, dass, wenn Medien weit über 100° C erhitzt werden sollen, nur Öl als Temperiermedium in Frage kommt.Bezogen auf den automatischen Blasformwechsel mittels eines Roboters ziehen die flüssigen Temperiermedien einige Nachteile mit sich, da deren Kupplungen in aufwendiger Weise getrennt und verbunden werden müssen. Dabei kann es einerseits zu Leckagen und Verunreinigungen der Maschine kommen, was insbesondere bei der Verwendung von Öl als Temperiermedium unbedingt vermieden werden soll.

Andererseits wird der Wechselvorgang nachteiligerweise verlangsamt, da die Medienkupplungen gegebenenfalls händisch getrennt und verbunden werden müssen. Dies kann einige Zeit beanspruchen, wenn an jeder Formhälfte und an der Bodenform jeweils ein Vor- und Rücklauf an- und abgekuppelt werden muss.

Aus der EP 2 292 405 A2 ist eine Umformeinrichtung zum Umformen von Kunststoffvorformlingen zu Kunststoffbehältnissen sowie ein Verfahren zum Betreiben einer Umformeinrichtung bekannt. Darin ist beschrieben, dass eine haltende Verbindung zwischen einem Blasformträger und einer daran angeordneten mehrteiligen Blasform oder eine Temperierverbindung zum Temperieren der Blasform wenigstens teilweise austomatisiert gelöst oder hergestellt wird.

Aus der WO 2005/025835 A1 ist eine Vorrichtung zum Umformen von Kunststoffvorformlingen zu Kunststoffbehältnissen mit Blasformeinrichtungen bekannt, welche ein elektrisches Heizelement zum Temperieren der Blasformeinrichtungen aufweisen.

Aus der EP 2 703 146 A1 ist ein Verfahren zum Kühlen einer erhitzten Form einer Vorrichtung zum Blasformen von Behälntern aus thermoplastischem Material, durch Zirkulieren eines Kühlmittels bekannt, welches in direktem Kontakt mit einer Außenfläche der Form besteht.

Aus der DE 10 2010 006898 A1 ist eine Vorrichtung zur Blasformung von Behältern bekannt, bei denen ein Vorformling innerhalb einer Blasform der Blasmaschen thermisch konditioniert wird, indem die Blasfrom mindestens bereichsweise durch ein elektrisches Heizelement erwärmt wird.

Der vorliegenden Erfindung liegt die Aufgabe zugrunde, die aus dem Stand der Technik bekannten Nachteile zu überwinden und eine Lösung zu finden, temperierte Blasformen insbesondere auch für den automatischen Formenwechsel kompatibel zu gestalten.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Eine erfindungsgemäße Vorrichtung zum Umformen von Kunststoffvorformlingen zu Kunststoffbehältnissen weist eine Vielzahl von Blasstationen auf, wobei diese Blasstationen jeweils eine, bevorzugt temperierbare, Blasformeinrichtung aufweisen, welche bevorzugt zwei Blasformhälften und eine Bodenform aufweist und besonders bevorzugt aus zwei Blasformhälften und einer Bodenform besteht und wobei die Blasformeinrichtung jeweils einen Hohlraum ausbildet, innerhalb dessen die Kunststoffvorformlinge zu den Kunststoffbehältnissen umformbar sind, und welche lösbar mittelbar oder unmittelbar an Blasformträgern angeordnet ist, wobei wenigstens eine Blasstation, bevorzugt jede Blasstation, und besonders bevorzugt jede Blasformeinrichtung mindestens eine Temperiereinrichtung mit wenigstens einem elektrischen Heizelement zum wenigstens bereichsweisen bzw. abschnittsweisen Temperieren der Blasformeinrichtung aufweist.

Erfindungsgemäß weist die Vorrichtung wenigstens eine automatisch lösbare und/oder eine automatisch herstellbare elektrische Verbindung zwischen wenigstens einem elektrischen Heizelement und der Blasstation (bevorzugt der Blasformeinrichtung oder der Formträgerschale oder dem Blasformträger) auf. Bevorzugt weist die Vorrichtung für jede Blasstation eine automatisch lösbare und/oder eine automatisch herstellbare elektrische Verbindung zwischen wenigstens einem elektrischen Heizelement und der jeweiligen Blasstation auf. Nachfolgend wird die Erfindung in Bezug auf eine Blasstation beschrieben. Es versteht sich dabei von selbst, dass jede Blasstation mit den beschriebenen Merkmalen ausgestattet sein kann.

Bevorzugt weist wenigstens eine Blasstation, besonders bevorzugt weist jede Blasstation eine elektrische Temperiereinrichtung auf. Dabei kann die elektrische Temperiereinrichtung als alleinige Temperiereinrichtung vorgesehen sein. Denkbar ist aber auch, dass diese zusätzlich bzw. unterstützend zu wenigstens einer weiteren, nicht-elektrisch betriebenen Temperiereinrichtung, welche ein flüssiges Temperiermedium verwendet, vorgesehen ist. Bevorzugt weist die Temperiereinrichtung wenigstens ein Peltier-Element auf. Der Vorteil eines Peltier-Elementes liegt dabei insbesondere darin, dass bei Verwendung eines solchen kein zusätzliches Temperiermedium benötigt wird, welches der Vorrichtung zugeführt werden muss. Das elektrische Heizelement kann bevorzugt (jeweils) als elektrischer Heizstab ausgebildet sein. Die elektrische Temperiereinrichtung kann dabei bevorzugt auch mehrere elektrische Heizelemente aufweisen.

Die erfindungsgemäß vorgesehenen Temperiereinrichtung(en) mit wenigstens einem elektrischen Heizelement temperieren (also erwärmen und/oder kühlen ab) die (jeweilige) Blasformeinrichtung wenigstens abschnittsweise zumindest mittelbar und bevorzugt unmittelbar. Das wenigstens eine elektrische Heizelement kann also direkt in (physischem) Kontakt mit der Blasformeinrichtung sein, ausreichend ist allerdings bevorzugt auch ein rein thermischer (bzw. thermisch herstellbarer) Kontakt mit der Blasformeinrichtung. Mit anderen Worten kann das eine elektrische Heizelement bzw. können die elektrischen Heizelemente unmittelbar an der Blasformeinrichtung anliegen und/oder an und/oder in der Blasformeinrichtung angeordnet sein.

Unter dem Begriff "automatisch" ist dabei bevorzugt zu verstehen, dass dies ohne (direkte bzw. unmittelbare) Einwirkung bzw. Eingriff eines Bedieners der Vorrichtung erfolgt. Es ist also bevorzugt kein Bediener der Vorrichtung beteiligt, der die elektrische Verbindung(en) manuell löst und/oder herstellt. Bevorzugt wird die automatische Verbindungstrennung und/oder automatische Verbindungsherstellung auch nicht (direkt) von einem Bediener initiiert, etwa in dem Sinne, dass dieser ein hierfür vorgesehenes Schaltelement betätigt. Bevorzugt erfolgt das automatische Lösen und/oder das automatische Herstellen der elektrischen Verbindung in einem Wechselbetriebsmodus der Vorrichtung, in dem wenigstens eine Blasformeinrichtung gewechselt wird und der sich von einem Expansionsbetriebsmodus, in dem die Kunststoffvorformlinge zu Kunststoffbehältnissen expandiert werden, unterscheidet. Bevorzugt ist damit das automatische Lösen und/oder das automatische Herstellen der (bzw. den) elektrischen Verbindung(en) (zeitlich) mit einem Wechselvorgang wenigstens einer bzw. der Blasformeinrichtung der jeweiligen Blasstation korreliert. So kann beispielsweise zu Beginn eines Wechsels einer Blasformeinrichtung das automatische Lösen der elektrischen Verbindung(en), etwa durch Übermittlung eines Signals, ausgelöst bzw. initiiert werden und/oder nach Einsetzen bzw. Anbringen einer neuen Blasformeinrichtung in eine Blasstation das automatische Herstellen der elektrischen Verbindung(en), etwa durch Übermittlung eines Signals, ausgelöst bzw. initiiert werden. Bevorzugt kann das automatische Lösen bzw. das automatische Herstellen der elektrischen Verbindung(en) von einem (elektronischen) Signal ausgelöst bzw. initiiert werden, welches von einer Freigabeeinrichtung der Vorrichtung übermittelt wird. Die Freigabeeinrichtung kontrolliert dabei bevorzugt, ob ein Wechsel der Blasformeinrichtung freigegeben ist bzw. durchgeführt werden darf und/oder bevorzugt ob eine im Rahmen eines Wechsels neu einzusetzende Blasformeinrichtung in korrekter Weise an der Blasstation angeordnet worden ist und die elektrische Verbindung(en) in Folge wieder hergestellt werden dürfen.

Bei der Vorrichtung zum Umformen von Kunststoffvorformlingen zu Kunststoffbehältnissen handelt es sich bevorzugt um eine Blasmaschine. Dies bedeutet, dass die Kunststoffvorformlinge zunächst in einer Heizstrecke thermisch konditioniert und anschließend durch Beaufschlagung mit einem flüssigen oder gasförmigen Medium expandiert werden. Das fließfähige Medium steht bevorzugt unter Druck. Für die Zuführung des unter Druck stehenden Mediums weist die Vorrichtung eine Blasdüse auf, welche an eine Mündung der Kunststoffvorformlinge dichtend anlegbar ist, um die Kunststoffvorformlinge so mit flüssigem oder gasförmigem Medium zu expandieren. Daneben ist bevorzugt auch eine Ventilanordnung vorgesehen, welche die Zuführung der Blasluft an die Kunststoffvorformlinge steuert.

Bevorzugt handelt es sich bei der Blasmaschine um eine Streckblasmaschine, was bedeutet, dass die Vorformlinge vor und/oder während der Expansion mittels einer Reckstange in Längsrichtung gedehnt werden. Die Blasstationen weisen dabei jeweils Reckstangen auf, welche in die Kunststoffvorformlinge einführbar sind und die Kunststoffvorformlinge in ihrer Längsrichtung dehnen. Die Reckstangen weisen dabei bevorzugt einen elektrischen Antrieb auf.

Bei einer vorteilhaften Ausführungsform ist eine Vielzahl von Blasstationen an einem gemeinsamen beweglichen Träger angeordnet. Bei diesem Träger handelt es sich dabei insbesondere um einen drehbaren Träger. Die Blasstationen weisen jeweils eine Blasformeinrichtung auf, welche bevorzugt einen Hohlraum ausbilden, innerhalb dessen die Kunststoffvorformlinge zu den Kunststoffbehältnissen expandierbar sind. Diese Blasformeinrichtungen sind dabei bevorzugt mehrteilig ausgebildet und weisen zwei Blasformhälften und eine Bodenform auf. Bevorzugt sind diese Blasformhälften lösbar an einer Formträgerschale oder an den Blasformträgern angeordnet. Die Blasformträger sind bezüglich einander schwenkbar sind, um die Blasformeinrichtungen zu öffnen und zu schließen. Zudem weist der Blasformträger Verriegelungsmechanismen auf, um die Formhälften während des Blasvorgangs gegeneinander zu verriegeln.

Besonders bevorzugt ist die Blasmaschine bzw. sind der Träger und die Blasformanordnungen innerhalb eines Reinraums angeordnet, welcher die Blasformmaschine gegenüber einer unsterilen Umgebung abgrenzt. Antriebseinrichtungen für die Verschließung, Verriegelung und/oder Öffnung der Blasformen sind dabei bevorzugt außerhalb des Reinraums angeordnet.

Die Blasformeinrichtungen werden bevorzugt innerhalb des Reinraums transportiert. Der Reinraum wird bevorzugt von mehreren Wandungen begrenzt. Bevorzugt wird der Reinraum dabei von wenigstens einer stehenden Wandung und einer sich gegenüber dieser stehenden Wandung bewegenden Wandung begrenzt. Der Reinraum grenzt die Blasformen insbesondere von einer unsterilen Umgebung ab. Vorteilhaft ist der Reinraum ring- oder torusartig um die Blasstationen bzw. Umformungsstationen und/oder den Transportpfad der Kunststoffbehältnisse ausgebildet.

Bevorzugt weist die Vorrichtung einen Schleifringüberträger auf, der besonders bevorzugt sämtliche elektrische Energie in den drehenden Teil der Vorrichtung bringt. Bevorzugt wird zugleich durch ein automatisches Lösen bzw. ein automatisches Herstellen der elektrischen Verbindung(en) eine elektrische Verbindung zwischen dem jeweiligen Heizelement und der elektrischen Energieversorgung des drehenden Teils der Vorrichtung bzw. des drehbaren Trägers bzw. des Schleifringüberträgers gelöst bzw. hergestellt. Bevorzugt weist die Vorrichtung weiterhin einen Drehverteiler für Kühlmedium auf.

Bevorzugt verbleiben bei einem Wechsel der Blasformeinrichtung bzw. der Blasformhälften und/oder der Bodenform, die Blasformträger und die Formträgerschale an der Vorrichtung.

Bevorzugt verbleibt bei einem Wechsel der Blasformeinrichtung die zur Temperierung der Blasformeinrichtung vorgesehene Temperiereinrichtung an der Vorrichtung. Die Temperiereinrichtung kann aber auch wenigstens teilweise zusammen mit wenigstens einem Teil der Blasformeinrichtung, etwa einer Blasformhälfte, ausgewechselt werden.

In einer vorteilhaften Ausführungsform sind die Blasformeinrichtungen bevorzugt über Formträgerschalen an den Blasformträgern angeordnet.

In einer weiteren vorteilhaften Ausführungsform ist an jeder Blasformhälfte jeweils eine Verriegelungseinrichtung vorgesehen, welche die Blasformeinrichtung lösbar an der Formträgerschale oder an dem Blasformträger befestigt.

In einer weiteren vorteilhaften Ausführungsform weist die Vorrichtung wenigstens eine Auslöseeinrichtung auf, die dazu geeignet und bestimmt ist, ein automatisches Lösen und/oder ein automatisches Herstellen einer elektrischen Verbindung zwischen dem wenigstens einen elektrischen Heizelement und der Umformungsstation zu bewirken. Bevorzugt greift dabei die Auslöseeinrichtung in wenigstens ein Element der Blasstation bzw. der Blasformeinrichtung und/oder der Formträgerschale und/oder des Blasformträgers ein.

In einer weiteren vorteilhaften Ausführungsform ist als Auslöseeinrichtung (wenigstens) eine Wechseleinrichtung vorgesehen, welche geeignet und dazu bestimmt ist, (bevorzugt wahlweise) die vollständige Blasformeinrichtung (oder nur Teile der Blasformeinrichtung, insbesondere nur die Blasformhälften und/oder nur die Bodenform,) insbesondere automatisch zu wechseln, insbesondere von deren Blasformträger zu entfernen und/oder eine Blasformeinrichtung an den Blasformträgern anzuordnen. Mit anderen Worten führt damit bevorzugt die Wechseleinrichtung nicht nur den Wechsel wenigstens einer Blasformhälfte oder Bodenform durch, sondern zeitlich vor und/oder während und/oder nach diesem Wechsel ebenfalls ein Lösen der elektrischen Verbindung(en) zwischen dem wenigstens einen elektrischen Heizelement und der Blasstation durch. Bevorzugt ist die Wechseleinrichtung (auch) dazu geeignet und bestimmt, wenigstens eine bzw. alle Kupplungseinrichtung(en) für Medien einer vorgegebenen Blasstation zu trennen und/oder zu verbinden.

Die Verwendung (wenigstens) einer Wechseleinrichtung ist insbesondere dann vorteilhaft, wenn häufige Wechsel von Blasformeinrichtungen vorgenommen werden müssen. Bei der Wechseleinrichtung handelt es sich bevorzugt um einen halbautomatischen und bevorzugt vollautomatischen Roboter. Es kann jedoch auch eine manuelle Wechseleinrichtung vorgesehen sein. So wäre es beispielsweise möglich, dass anstelle eines Roboters ein sogenannter Manipulator eingesetzt wird. Ein Manipulator kompensiert das Eigengewicht eines zu bewegenden Werkstücks, wie etwa einer Blasformeinrichtung, um die Bedienung zu erleichtern. Der Bediener kann den Manipulator, an dessen Ende der Formengreifer befestigt ist, führen. Ein derartiger Wechsel mittels eines Manipulators wird nicht automatisch durchgeführt bzw. ohne Bediener. Es wird darauf hingewiesen, dass die Ausgestaltung der Wechseleinrichtung als Manipulator auch unabhängig davon eingesetzt werden kann, ob die Wechseleinrichtung außerhalb des Wechselmodus noch andere Tätigkeiten durchführt.

Mit anderen Worten kann es sich bei der Wechseleinrichtung bevorzugt um ein mobiles Gerät handeln, welches bevorzugt in ihrer Gesamtheit bewegt werden kann, und es sich bevorzugt nicht um eine stationäre Einrichtung handelt. Bevorzugt ist die Wechseleinrichtung dazu geeignet und bestimmt, nicht nur den Wechsel einer Blasformeinrichtung und/oder das Lösen und/oder Herstellen der elektrischen Verbindung(en) zwischen wenigstens einem Heizelement und der Blasstation einer vorgegebenen Blasstation an der Vorrichtung vorzunehmen, ist also nicht genau einer Blasstation zugeordnet, sondern dazu geeignet und/oder bestimmt, dies wenigstens auch bei einer weiteren Blasstation und bevorzugt bei allen Blasstationen der Vorrichtung vorzunehmen. Denkbar ist aber auch, dass mehrere Wechseleinrichtungen vorgesehen sind, die etwa zeitgleich verschiedene Blasstationen bedienen und die insbesondere die elektrische(n) Verbindung(en) der Temperiereinrichtung (bevorzugt zeitgleich, denkbar aber auch zeitlich nacheinander) trennen und/oder herstellen. Dies bietet den Vorteil einer weiteren Zeitersparnis.

Bevorzugt wird die wenigstens eine Wechseleinrichtung in dem Wechselbetriebsmodus eingesetzt. Vorteilhaft kann die Wechseleinrichtung ebenfalls innerhalb des Reinraumes angeordnet sein, besonders bevorzugt nicht nur in einem Wechselbetriebsmodus sondern auch in einem Expansionsbetriebsmodus der Vorrichtung.

In einer weiteren vorteilhaften Ausführungsform weist die Wechseleinrichtung mindestens eine Greifeinrichtung zum Greifen der Blasformeinrichtung auf, wobei die Greifeinrichtung geeignet dazu ist, wahlweise eine vollständige Blasformeinrichtung oder nur Teile der Blasformeinrichtung zu wechseln. Bevorzugt ist die Greifeinrichtung derart an der Wechseleinrichtung angeordnet, dass sie um mehrere Achsen schwenkbar ist. Bevorzugt ist die Greifeinrichtung form- und/oder kraftschlüssig mit der Blasformeinrichtung bzw. wenigstens einer Blasformhälfte und bevorzugt den beiden Blasformhälften und/oder der Bodenform verbindbar.

In einer weiteren vorteilhaften Ausführungsform erfolgt das Lösen und/oder Herstellen der elektrischen Verbindung durch mindestens eine Greifeinrichtung der Wechseleinrichtung. Bevorzugt ist die Greifeinrichtung dazu geeignet und bestimmt, durch Betätigen wenigstens eines Schaltelementes die elektrische Verbindung zwischen dem wenigstens einen Heizelement und der Blasstation, bevorzugt der Blasformeinrichtung, herzustellen und/oder zu lösen. Bevorzugt ist der Roboter bzw. die Wechseleinrichtung dazu geeignet und bestimmt, die (bevorzugt alle) elektrische(n) Verbindung(en) (zwischen den Heizelementen und der Blasstation bzw. bevorzugt der Blasformeinrichtung), bevorzugt mit seiner Greifeinrichtung, zu lösen.

In einer weiteren vorteilhaften Ausführungsform wird die Blasformeinrichtung in ihrer Gesamtheit entnommen und in einem Magazin abgelegt, wobei die Blasformhälften und die Bodenform in diesem Zustand lösbar aneinander befestigt sind. Unter dem Begriff Gesamtheit wird darunter bevorzugt die zwei Blasformhälften und die Bodenform verstanden. Mit anderen Worten werden also alle drei Teile aneinander befestigt. Bevorzugt ist die Wechseleinrichtung dazu geeignet und bestimmt, die Blasformeinrichtung in ihrer Gesamtheit (von der Blasstation) zu entnehmen und in einem Magazin abzulegen, wobei die Blasformhälften und die Bodenform in diesem Zustand lösbar aneinander befestigt sind.

In einer weiteren vorteilhaften Ausführungsform ist die Wechseleinrichtung dazu geeignet und bestimmt, zeitlich vor, während oder nach dem Greifen der Blasformeinrichtung die elektrische Verbindung(en) zwischen dem wenigstens einen Heizelement und der Blasstation zu lösen und/oder zu verbinden, bevorzugt allerdings immer noch während eines einzelnen Wechselvorgangs einer Blasformeinrichtung bzw. eines Teils einer Blasformeinrichtung. Die Blasformeinrichtungen werden bevorzugt als Formenpaket, bestehend aus Bodenform und den zwei Blasformhälften aufgenommen.

In einer weiteren vorteilhaften Ausführungsform nimmt die Wechseleinrichtung das Lösen und/oder das Herstellen der elektrischen Verbindung(en) im Wesentlichen zeitgleich mit dem Wechsel wenigstens eines Teils der Blasformeinrichtung vor. Dies bietet den Vorteil, dass etwa ein Roboter auch heiße Blasformeinrichtungen greifen kann. Denkbar ist, dass hierfür die Wechseleinrichtung auch mehr als eine Greifeinrichtung aufweist. Bevorzugt nimmt die Wechseleinrichtung das Lösen und/oder das Herstellen der elektrischen Verbindung(en) zwischen wenigstens einem Heizelement und der Blasstation zeitgleich mit dem Wechsel einer Blasformhälfte vor, besonders bevorzugt durch denselben Verfahrensschritt. Beispielsweise kann bereits durch das Herausnehmen und/oder das Einsetzen einer Blasformhälfte bereits eine elektrische Verbindung bzw. ein elektrischer Kontakt unterbrochen bzw. hergestellt werden.

In einer weiteren vorteilhaften Ausführungsform erfolgt das Lösen der wenigstens einen elektrischen Verbindung durch das Entnehmen wenigstens eines Teils der Blasformeinrichtung und/oder das Herstellen der wenigstens einen elektrischen Verbindung durch das Einsetzen wenigstens eines Teils einer Blasformeinrichtung.

In einer weiteren vorteilhaften Ausführungsform erfolgt das Lösen und/oder das Herstellen der wenigstens einen elektrischen Verbindung durch, insbesondere automatisches, Anheben und/oder Absenken der Blasformeinrichtung, bevorzugt wenigstens einer Blasformhälfte und/oder der Bodenform.

In einer weiteren vorteilhaften Ausführungsform erfolgt das Lösen der wenigstens einen elektrischen Verbindung durch das An- und Abstecken eines, bevorzugt an und/oder außerhalb der Blasformeinrichtung angeordneten, Steckelementes einer (elektrischen) Steckverbindung. Bevorzugt ist ein Gegenstück dieses Steckelementes an der Formträgerschale oder an dem Blasformträger, bevorzugt in der Nähe der Blasdüse, angeordnet. Bevorzugt weist jede Blasformhälfte (und/oder die Bodenform) jeweils wenigstens ein und bevorzugt genau ein Steckelement auf. Denkbar ist aber auch, dass lediglich eine elektrische Steckverbindung zwischen der Blasformeinrichtung und der (restlichen) Blasstation bzw. der Formträgerschale oder dem Blasformträger vorhanden ist. Denkbar ist in diesem Falle, dass zwischen zwei Blasformhälften ebenfalls eine automatisch lösbare elektrische (Steck-)Verbindung vorgesehen ist. Denkbar ist ebenfalls, dass zwischen der Bodenform und wenigstens einer Blasformhälfte eine bevorzugt automatisch lösbare elektrische (Steck-)Verbindung vorgesehen ist.

Bevorzugt weist die (bevorzugt jede) Steckverbindung bzw. das (bevorzugt jedes) Steckelement und/oder das (bevorzugt jedes) Gegenstück dieses Steckelementes neben (wenigstens) einer elektrischen Verbindung auch wenigstens einen Vor- und/oder Rücklauf für ein (zusätzliches Kühlmedium) bzw. einen Anschluss für einen Vor- und/oder Rücklauf für ein (zusätzliches) Kühlmedium auf. Dieses zusätzliche Kühlmedium kann vorteilhaft dazu verwendet werden, um empfindliche Teile der Blasstation vor Überhitzung zu schützen.

In einer weiteren vorteilhaften Ausführungsform weist die Auslöseeinrichtung wenigstens ein Element auf, das ausgewählt ist aus einer Gruppe, die ein Stellelement, einen Pneumatikzylinder, eine positionierbare Kurve und/oder Kombinationen hieraus enthält. Bevorzugt greift diese Auslöseeinrichtung mechanisch in wenigstens ein Element der Blasformeinrichtung ein. Durch dieses mechanische Eingreifen kann eine Bewegung, etwa ein Anheben und/oder ein Absenken, wenigstens eines Teiles der Blasformeinrichtung, bevorzugt der beiden Blasformhälften und/oder der Bodenform, bewirkt bzw. ausgelöst werden.

Bevorzugt kann die elektrische Verbindung bzw. können die elektrischen Verbindungen damit durch eine automatisch ausgelöste Bewegung der Blasformeinrichtung und/oder durch eine Greifeinrichtung des Roboters und/oder durch Einsetzen und Entnehmen der Blasformeinrichtungen, etwa mittels Steckverbindungen gelöst werden.

In einer weiteren vorteilhaften Ausführungsform weist die Vorrichtung eine Konditioniereinrichtung zum thermischen Konditionieren und insbesondere zum Kühlen wenigstens eines Blasformträgers und/oder der Blasformeinrichtung auf, damit bevorzugt eine Druckkissendichtung eine vorgegebene Temperatur nicht überschreitet bzw. nicht heiß wird. Bevorzugt ist eine derartige Konditioniereinrichtung als Sicherheitsmechanismus vorgesehen, dass die Formen zuerst abgekühlt werden, bevor ein Bediener diese anfasst. Dies ist insbesondere von hoher Relevanz, wenn ein Blasformwechsel manuell erfolgt.

In einer weiteren vorteilhaften Ausführungsform weist die Vorrichtung eine Temperaturmesseinrichtung zur Erfassung eines für die Temperatur (der Blasstation) bevorzugt der Blasformeinrichtung (etwa einer Blasformhälfte und/oder der Bodenform) und/oder der Formträgerschale charakteristischen Wertes auf. Bevorzugt erfolgt das automatische Lösen und/oder das automatische Herstellen der elektrischen Verbindung(en) unter Berücksichtigung des von der Temperaturmesseinrichtung erfassten charakteristischen Wertes. Bevorzugt erfolgt allerdings lediglich das automatische Lösen, nicht aber das automatische Herstellen der elektrischen Verbindung(en) unter Berücksichtigung des von der Temperaturmesseinrichtung erfassten charakteristischen Wertes. Bevorzugt wird ein (Initialisierungs-)Signal an die Auslöseeinrichtung übermittelt, sobald der von der Temperaturmesseinrichtung erfasste charakteristische Wert einen vorgegebenen Höchstwert unterschreitet. Bevorzugt ist die Auslöseeinrichtung dazu geeignet und bestimmt, auf dieses Signal hin das automatische Lösen der elektrischen Verbindung(en) vorzunehmen.

In einer weiteren vorteilhaften Ausführungsform weist die Vorrichtung eine Temperaturregelungseinrichtung zum Regeln der Temperatur unter Berücksichtigung des von Temperaturmesseinrichtung erfassten (charakteristischen) Wertes auf. Bevorzugt wird diese Temperaturregelung ebenfalls automatisch ausgelöst, bevorzugt sobald sich die Vorrichtung in einem Wechselbetriebsmodus befindet bzw. sobald ein solcher aktiviert wird. Bevorzugt nimmt die Temperaturregelungseinrichtung eine Temperaturregelung, besonders bevorzugt auch mittels Kühlung beispielsweise der Blasformträger vor, bis ein vorgegebener für die Temperatur der Blasformeinrichtung charakteristischer Wert einen vorgegebenen Wert unterschreitet.

Die vorliegende Erfindung ist weiterhin auf ein Verfahren zum Wechseln von einer Blasformeinrichtung einer Blasstation einer Vorrichtung zum Umformen von Kunststoffvorformlingen zu Kunststoffbehältnissen gerichtet, wobei die Blasformeinrichtung einen Hohlraum ausbildet, innerhalb dem die Kunststoffvorformlinge zu den Kunststoffbehältnissen umformbar sind, und wobei die (bevorzugt temperierbare) Blasformeinrichtung (bevorzugt über Blasformträgerschalen), bevorzugt lösbar mittelbar oder unmittelbar, an Blasformträgern angeordnet ist, wobei (mindestens) eine Temperiereinrichtung mit wenigstens einem elektrischen Heizelement zum wenigstens bereichsweisen Temperieren der Blasformeinrichtung, bevorzugt in wenigstens einer und insbesondere in jeder Blasstation und besonders bevorzugt in bzw. an jeder Blasformeinrichtung, vorgesehen ist.

Erfindungsgemäß wird wenigstens eine elektrische Verbindung zwischen wenigstens einem elektrischen Heizelement und der Blasstation automatisch gelöst und/oder automatisch hergestellt. Es wird also auch im Rahmen des erfindungsgemäßen Verfahrens vorgeschlagen, dass die elektrische Verbindung nicht von einem Bediener (manuell) gelöst bzw. eine Lösung oder Herstellung der elektrischen Verbindung von dem Bediener ausgelöst werden muss, sondern dass eine solche Verbindungstrennung oder Verbindungsherstellung automatisch durchgeführt wird und etwa mit einem vorgegebenen Wechselschritt der Blasformeinrichtung korreliert ist.

In einer vorteilhaften Ausführungsform löst und/oder stellt eine Auslöseeinrichtung die elektrische Verbindung in einem Wechselbetriebsmodus der Vorrichtung automatisch her. Bevorzugt ist eine Steuerungseinrichtung vorgesehen. Bevorzugt sind die elektrischen Heizelemente verbunden mit der Steuerungseinrichtung der Blasmaschine.

Die vorliegende Erfindung ist weiterhin gerichtet auf eine Vorrichtung zum Umformen von Kunststoffvorformlingen zu Kunststoffbehältnissen mit einer Vielzahl von Blasstationen, wobei diese Blasstationen jeweils eine Blasformeinrichtung aufweisen, welche jeweils einen Hohlraum ausbildet, innerhalb dem die Kunststoffvorformlinge zu den Kunststoffbehältnissen umformbar sind, und welche über Formträgerschalen an Blasformträgern angeordnet ist, wobei eine Wechseleinrichtung vorgesehen ist, welche geeignet und dazu bestimmt ist, (bevorzugt wahlweise) die vollständige Blasformeinrichtung (oder nur Teile der Blasformeinrichtung) insbesondere automatisch zu wechseln, insbesondere von deren Blasformträgern zu entfernen und/oder eine Blasformeinrichtung an den Blasformträgern anzuordnen.

Erfindungsgemäß weist die Vorrichtung eine Temperiereinrichtung mit wenigstens einem elektrischen Heizelement zum wenigstens mittelbaren, wenigstens bereichsweisen Temperieren der Blasformeinrichtung auf. Dabei kann die Vorrichtung mit allen Merkmalen in Zusammenhang mit obig beschriebener Vorrichtung einzeln oder in Kombination ausgestattet sein und umgekehrt.

Bevorzugt weist die Temperiereinrichtung eine in der (jeweiligen) Blasstation angeordnete Vielzahl von Heizelement auf, welche bevorzugt als Heizstäbe ausgestaltet sein können. Bevorzugt ist die Temperiereinrichtung bzw. sind die elektrischen Heizstäbe dazu geeignet und bestimmt, die Blasformeinrichtung wenigstens bereichsweise und bevorzugt deren Innenwandung (die in Richtung des Hohlraums befindliche Wandung) besonders bevorzugt auf Temperaturen von mindestens 70° C, bevorzugt mindestens 80° C und besonders bevorzugt mindestens 100° C zu temperieren. Die Heizstäbe bzw. die elektrischen Heizelemente können dabei im Wesentlichen senkrecht (d.h. parallel zu einer Längsachse der in die Blasformeinrichtung einzulegenden Kunststoffvorformlinge) (in der Blasstation) angeordnet sein. Ferner sind die elektrischen Heizelemente bevorzugt äquidistant (in Umfangsrichtung der Blasstation gesehen) angeordnet. Es ist aber auch denkbar, dass die einzelnen elektrischen Heizelemente in der Art einer Heizschleife, welche sich etwa in der Art einer Spirale von der einen Seite einer Blasformhälfte bzw. einer Blasstation zu einer anderen Seite einer Blasformhälfte bzw. einer Blasstation erstreckt, angeordnet sind. Bevorzugt weist jede Blasformhälfte der Blasstation dieselbe Anzahl von elektrischen Heizelementen auf und besonders bevorzugt sind diese (besonders bevorzugt spiegel-) symmetrisch zueinander angeordnet. Dies bietet den Vorteil, dass beide Seiten eines Kunststoffvorformlings bzw. des entstehenden Kunststoffbehältnisses in gleicher Weise temperiert werden.

In einer vorteilhaften Ausführungsform ist das wenigstens eine elektrische Heizelement an der Blasstation angeordnet und verbleibt während einem Wechsel der Blasformeinrichtung an der Blasstation. Bevorzugt ist das wenigstens eine elektrische Heizelement permanent bezüglich einem Wechsel einer Blasformeinrichtung an der Blasstation angeordnet, d.h. bevorzugt an einem bei einem Wechsel einer Blasformeinrichtung permanent an der Blasstation verbleibenden Element angeordnet. Dies bietet den Vorteil, dass das Heizelement bzw. die Temperiereinrichtung in der Blasstation verbleiben kann und etwa bei einem Blasformwechsel keine elektrische Verbindung von der elektrischen Temperiereinrichtung zu der Stromquelle gelöst werden muss. Des Weiteren ist hierdurch ein weniger komplexer Aufbau der Blasformeinrichtungen (ohne elektrische Heizelemente), die an die herzustellenden Behältnisse angepasst werden müssen, möglich. Bevorzugt weist daher wenigstens eine Blasformhälfte und/oder die Bodenform und bevorzugt weisen beide Blasformhälften kein elektrisches Heizelement bzw. Teile der (elektrischen) Temperiereinrichtung auf.

In einer weiteren vorteilhaften Ausführungsform ist die (elektrische) Temperiereinrichtung zumindest teilweise an wenigstens einem Teil der Blasformeinrichtung und/oder zumindest teilweise innerhalb wenigstens eines Teils der Blasformeinrichtung angeordnet. Bevorzugt ist die elektrische Temperiereinrichtung zumindest teilweise (bzw. wenigstens ein elektrisches Heizelement) in wenigstens einer Blasformhälfte und besonders bevorzugt ist jeweils eine elektrische Temperiereinrichtung (bzw. wenigstens ein elektrisches Heizelement) zumindest teilweise in beiden Blasformhälften (und/oder der Bodenform) angeordnet. Dies bietet den Vorteil, dass die Temperiereinrichtung jeweils möglichst nahe an der zu temperierenden (Innen-) Wandung/Fläche der Blasformeinrichtung angeordnet ist.

In einer weiteren vorteilhaften Ausführungsform weist die Blasformeinrichtung, insbesondere wenigstens eine Blasformhälfte der Blasformeinrichtung und bevorzugt weisen beide Blasformhälften der Blasformeinrichtung jeweils, das wenigstens eine elektrische Heizelement und bevorzugt alle jeweils zu der Temperiereinrichtung (der Blasformhälfte) gehörenden elektrischen Heizelemente auf.

In einer weiteren vorteilhaften Ausführungsform weist die Formträgerschale das wenigstens eine elektrische Heizelement und bevorzugt alle zu der Temperiereinrichtung gehörenden elektrischen Heizelemente auf. Das elektrische Heizelement bzw. die elektrischen Heizelmente sind bevorzugt in dem Inneren der Formträgerschale angeordnet. Denkbar ist aber auch, dass etwa ein Teil der Temperiereinrichtung in der Formträgerschale und ein weiterer Teil der Temperiereinrichtung in der Blasformeinrichtung angeordnet ist. So kann etwa eine Fein-Justierung der Temperierung durch in der Blasformeinrichtung angeordnete elektrische Heizelemente erfolgen.

Bevorzugt weist die Formträgerschale und/oder der Blasformträger wenigstens ein Isolierelement auf, das bevorzugt eine elektrische Verbindung bzw. einen elektrischen Kontakt gegenüber wenigstens einem weiteren Element der Vorrichtung isoliert.

In einer weiteren vorteilhaften Ausführungsform ist wenigstens ein elektrischer Kontakt, über den das elektrische Heizelement betreibbar bzw. über den das elektrische Heizelement mit einer Stromquelle verbindbar bzw. an eine Stromquelle anschließbar ist, an der Formträgerschale angeordnet. Bevorzugt kann die elektrische Verbindung an diesem elektrischen Kontakt gelöst werden. Dabei kann die elektrische Verbindung (etwa auch manuell) von einem Bediener der Vorrichtung gelöst werden. Dabei kann der elektrische Kontakt etwa an einer Oberseite der Formträgerschale oder an der Oberseite eines Blasformträgers angeordnet sein.

In einer weiteren vorteilhaften Ausführungsform ist wenigstens ein elektrischer Kontakt, über den das elektrische Heizelement mit einer Stromquelle verbindbar bzw. an eine Stromquelle anschließbar bzw. betreibbar ist, an dem Blasformträger angeordnet ist. Bevorzugt kann die elektrische Verbindung an diesem elektrischen Kontakt gelöst werden. Dabei kann die elektrische Verbindung (etwa auch manuell) von einem Bediener der Vorrichtung gelöst werden.

In einer weiteren vorteilhaften Ausführungsform weist die Wechseleinrichtung mindestens eine Greifeinrichtung zum Greifen der Blasformeinrichtung auf, wobei die Greifeinrichtung dazu geeignet ist, (bevorzugt wahlweise) eine vollständige Blasformeinrichtung (oder nur Teile der Blasformeinrichtung) zu wechseln. Die Greifeinrichtung ist bevorzugt form- und/oder kraftschlüssig mit der Blasformeinrichtung verbindbar. Bevorzugt erfolgt das Lösen und/oder Herstellen der elektrischen Verbindung durch mindestens eine Greifeinrichtung der Wechseleinrichtung.

In einer weiteren vorteilhaften Ausführungsform wird die Blasformeinrichtung in ihrer Gesamtheit von der Blasstation entnommen und in einem bevorzugt zusammengesetzten Zustand in einem Magazin abgelegt. Bevorzugt ist die Wechseleinrichtung dazu geeignet und bestimmt, die Blasformeinrichtung in ihrer Gesamtheit von der Blasstation zu entnehmen und in einem bevorzugt zusammengesetzten Zustand in einem Magazin abzulegen.

In einer weiteren vorteilhaften Ausführungsform weist die Vorrichtung eine Steuerungseinrichtung auf, die eine Unterbrechung und/oder Herstellung einer elektrischen Verbindung zwischen dem wenigstens einen elektrischen Heizelement und einem elektrischen Kontakt in der Blasstation, bevorzugt in einem Wechselbetriebsmodus der Vorrichtung, initiiert bzw. auslöst, wobei bevorzugt die Unterbrechung und/oder die Herstellung der elektrischen Verbindung zeitgleich mit einem Wechsel der Blasformeinrichtung oder zeitgleich mit einem Wechsel wenigstens eines Teils der Blasformeinrichtung, etwa einer Blasformhälfte, erfolgt. Bevorzugt initiiert die Steuerungseinrichtung eine derartige Unterbrechung und/oder Herstellung in Abhängigkeit davon, ob sich die Vorrichtung in einem Wechselbetriebsmodus oder in einem Expansionsbetriebsmodus, in dem die Behältnisse expandiert werden, befindet. Bevorzugt nimmt die Steuerungseinrichtung eine derartige Initiierung bzw. Auslösung vor, sobald die Vorrichtung in einen Wechselbetriebsmodus wechselt. Bevorzugt nimmt die Steuerungseinrichtung eine Unterbrechung und/oder Herstellung einer elektrischen Verbindung durch Ab- oder Anschaltung der Temperiereinrichtung vor. Bevorzugt erfolgt dies, ohne dass eine (physische bzw. mechanische) Lösung oder Herstellung einer elektrischen Verbindung in der Blasstation und/oder in der Blasformeinrichtung und/oder in der Formträgerschale erfolgt. Bevorzugt werden die Heizelemente, besonders bevorzugt über die Steuerungseinrichtung, (automatisch) abgeschaltet, wenn der Wechselvorgang stattfindet bzw. wenn sich die Vorrichtung in dem Wechselbetriebsmodus befindet und vorteilhaft wenn die Vorrichtung in den Wechselbetriebsmodus wechselt.

Bevorzugt ist das wenigstens eine elektrische Heizelement bzw. sind die (alle) elektrischen Heizelemente bzw. ist die Temperiereinrichtung mit der Steuerungseinrichtung der Blasmaschine verbunden.

In einer weiteren vorteilhaften Ausführungsform weist die Temperiereinrichtung wenigstens eine (elektrische) Steckverbindung auf, mittels der bzw. an der eine elektrische Verbindung zwischen dem wenigstens einen elektrischen Heizelement und einem elektrischen Kontakt in der Blasstation (physisch bzw. mechanisch) unterbrechbar, insbesondere lösbar, und/oder herstellbar ist. Dabei kann die Steckverbindung als rein elektrische Steckverbindung ausgestaltet sein, über die ausschließlich eine elektrische Verbindung gelöst und/oder hergestellt werden kann. Denkbar ist aber auch, dass die Steckverbindung auch zusätzlich zu dem elektrischen Anschluss einen weiteren Medienanschluss bzw. eine weitere Medienkupplungseinrichtung oder weitere Medienanschlüsse bzw. Medienkupplungseinrichtungen aufweist, die ebenfalls durch Lösen der Steckverbindung getrennt werden können. Des Weiteren kann die Steckverbindung in der Nähe bzw. neben bzw. angrenzend zu weiteren Medienkupplungseinrichtungen bzw. Medienanschlüssen der Blasformeinrichtung bzw. der Formträgerschale angeordnet sein. Bevorzugt weist die Blasformeinrichtung zudem Leitungen für Wärmeübertragungsmedien wie Wärmeübertragungsflüssigkeiten auf, deren Zufuhrleitungen und/oder Abführleitungen ebenfalls an- und/oder abgekuppelt werden (müssen). Bevorzugt erfolgt eine An- und/oder Abkupplung durch die Wechseleinrichtung, besonders bevorzugt zeitgleich oder zumindest zeitnah mit der Lösung und/oder Herstellung und/oder Unterbrechung der elektrischen Verbindung.

In einer weiteren vorteilhaften Ausführungsform erfolgt das Lösen der wenigstens einen elektrischen Verbindung durch das An- und Abstecken wenigstens eines, bevorzugt an und/oder außerhalb der Blasformeinrichtung angeordneten, Steckelementes einer Steckverbindung.

In einer weiteren vorteilhaften Ausführungsform enthält das Steckelement eine elektrische Verbindungsleitung sowie einen Vor- und einen Rücklauf für ein Kühlmedium. Bevorzugt wird dieses Kühlmedium, besonders bevorzugt in einem Wechselbetriebsmodus der Vorrichtung, zum Kühlen der Blasstation, insbesondere auch der Blasformträger, verwendet, um vorteilhaft eine potentielle Verbrennungsgefahr für einen Benutzer bzw. Bediener zu vermeiden.

Die vorliegende Erfindung ist weiterhin gerichtet auf ein Verfahren zum Wechseln von einer Blasformeinrichtung einer Blasstation einer Vorrichtung zum Umformen von Kunststoffvorformlingen zu Kunststoffbehältnissen, wobei die Blasformeinrichtung einen Hohlraum ausbildet, innerhalb dem die Kunststoffvorformlinge zu den Kunststoffbehältnissen umformbar sind, und welche an Blasformträgern angeordnet ist, wobei eine Wechseleinrichtung, bevorzugt wahlweise, die vollständige Blasformeinrichtung oder nur Teile der Blasformeinrichtung insbesondere automatisch wechselt, insbesondere von deren Blasformträger entfernt und/oder eine Blasformeinrichtung an den Blasformträgern anordnet.

Erfindungsgemäß erfolgt eine Temperierung wenigstens eines Teils der Blasformeinrichtung, bevorzugt der beiden Blasformhälften der Blasformeinrichtung, wenigstens bereichsweise über wenigstens ein elektrisches Heizelement.

In einer vorteilhaften Ausführungsform die Heizleistung des wenigstens einen elektrischen Heizelementes, bevorzugt in einem Wechselbetriebsmodus, geregelt bzw. abgeschaltet.

Weitere Vorteile und Ausführungsformen ergeben sich aus den beigefügten Zeichnungen: Darin zeigen:
- Fig. 1: eine schematische Darstellung einer erfindungsgemäßen Vorrichtung;
- Fig. 2: eine schematische Detaildarstellung einer Ausführungsform einer erfindungsgemäßen Vorrichtung;
- Fig. 3: eine schematische Detaildarstellung einer weiteren Ausführungsform einer erfindungsgemäßen Vorrichtung; und
- Fig. 4: eine schematische Detaildarstellung einer weiteren Ausführungsform einer erfindungsgemäßen Vorrichtung.

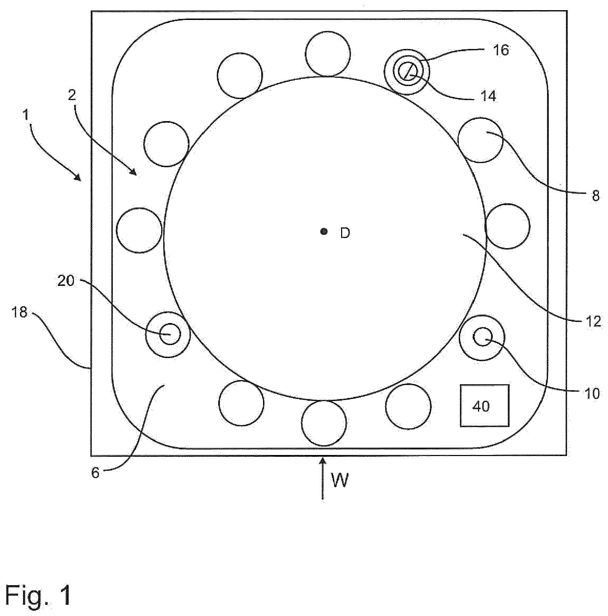

Fig. 1 zeigt eine schematische Darstellung einer Vorrichtung 1 zum Umformen von Kunststoffvorformlingen 10 zu Kunststoffbehältnissen 20. Dabei werden die Kunststoffvorformlinge 10 den einzelnen Blasstationen 8 zugeführt und, bevorzugt während sie von einer Transporteinrichtung 2 transportiert werden, zu Kunststoffbehältnissen 20 expandiert. Nach dieser Expansion werden die Kunststoffbehältnisse 20 wieder von der Vorrichtung 1 entnommen. Zu diesem Zwecke kann ein Zuführstern vorgesehen sein, der die Kunststoffvorformlinge der Vorrichtung 1 zuführt, sowie eine Abführeinrichtung, insbesondere ebenfalls ein Transportstern, der die fertiggestellten Behältnisse 20 von der Vorrichtung 1 abführt. Die Vorrichtung 1 weist einen (Stations-)Träger 12 auf, an dem eine Vielzahl von Blasstationen 8 angeordnet ist. Dieser Träger 12 kann dabei beispielsweise, wie in Fig. 1 gezeigt, ein Blasrad sein, welches bezüglich einer Drehachse D (welche hier senkrecht zu der Figurenebene und damit vertikal verläuft) drehbar ist. Jede einzelne Blasstation 8 weist dabei jeweils eine Blasformeinrichtung 14 auf. Diese Blasformeinrichtung 14 setzt sich aus zwei Blasformhälften und einer Bodenform zusammen. Diese Blasformeinrichtungen können, bevorzugt durch eine Wechseleinrichtung, ausgewechselt werden. Die Blasformeinrichtungen 14 sind dabei an Blasformträgern 16 angeordnet und können von diesen entnommen bzw. an diesen angeordnet werden.

Das Bezugszeichen 40 kennzeichnet eine Wechseleinrichtung, welche dazu dient, die Blasformeinrichtungen von deren Blasformträgern zu entfernen oder die Blasformeinrichtungen an den Blasformträgern anzuordnen. Das Bezugszeichen 6 kennzeichnet einen Basisträger, an dem der Stationsträger 12 drehbar gelagert ist. An bzw. neben dem Basisträger 6 ist bevorzugt auch die Wechseleinrichtung 40 angeordnet. Damit kann die Wechseleinrichtung 40 in die Vorrichtung integriert werden. Die Wechseleinrichtung 40 kann jedoch gleichermaßen auch außerhalb der Vorrichtung angeordnet sein, z.B. vor der Wechselposition W, und von außen in das Blasrad eingreifen.

Das Bezugszeichen W kennzeichnet eine Wechselposition. Die Blasformeinrichtungen können bevorzugt an einer bestimmten Wechselposition eingewechselt werden. Dies bedeutet, dass die Blasstationen 8 durch eine Drehung des Trägers 12 sukzessive in diese Wechselposition W gefahren werden können und in dieser Wechselposition dann die alten Blasformeinrichtungen entnommen und bevorzugt auch neue Blasformeinrichtungen zugeführt werden können. Das Bezugszeichen R kennzeichnet eine radiale Richtung. In dieser radialen Richtung wird die Wechseleinrichtung bzw. eine Greifeinrichtung der Wechseleinrichtung bevorzugt auf die Blasstationen 8 bzw. die Blasformeinrichtungen zugestellt, um diese zu wechseln.

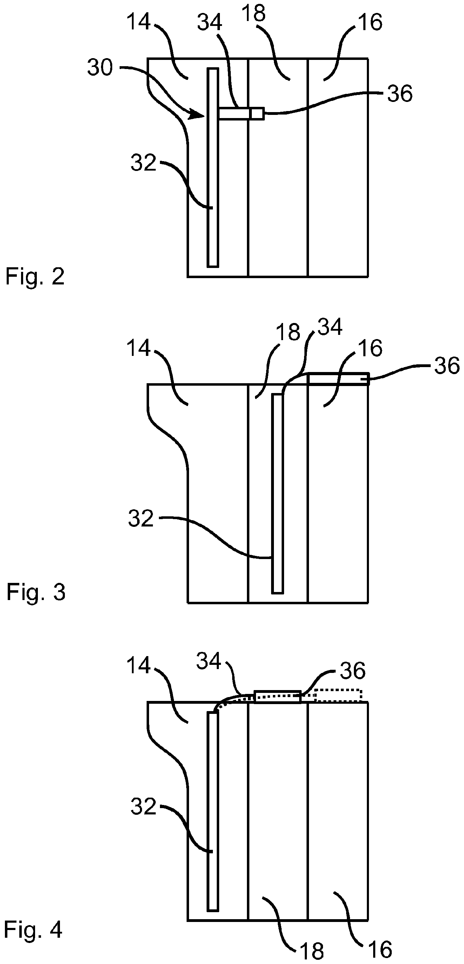

Fig. 2 zeigt eine schematische Detaildarstellung einer Ausführungsform einer erfindungsgemäßen Vorrichtung 1. Das Bezugszeichen 14 kennzeichnet eine Blasformeinrichtung bzw. eine Blasformhälfte einer Blasformeinrichtung. In dieser Ausführungsform ist innerhalb der Blasformhälfte selbst ein elektrisches Heizelement 32 angeordnet, welches über eine elektrische Verbindung 34 mit einem elektrischen Kontakt 36 verbunden ist. Der elektrische Kontakt 36 ist in der gezeigten Ausführungsform in der Formträgerschale 18 der Blasstation angeordnet. Über diesen elektrischen Kontakt 36 kann das elektrische Heizelement 32 an eine elektrische Stromversorgung angebunden werden. Die Formträgerschale 18 ist wiederum an dem Blasformträger 16 angeordnet. Gezeigt ist, dass die elektrische Verbindung 34 etwa als Steckverbindung ausgestaltet sein kann und so in einfacher Weise direkt beim Ein- und Auswechseln der Blasform an- und abgesteckt werden kann. Es können dabei mehrere Heizelemente 32 bzw. Heizstäbe vorgesehen sein, die etwa im Wesentlichen in äquidistanten Abständen (in Umfangsrichtung der Blasformeinrichtung gesehen) angeordnet sein können. In der hier gezeigten Variante befinden sich damit die Heizstäbe bzw. die elektrischen Heizelemente direkt in der Blasformeinrichtung. Das Herstellen einer elektrischen Verbindung erfolgt dann durch beispielsweise durch das Einlegen der Form bzw. eines Teils der Blasformeinrichtung 14 in die Formträgerschale 18 bzw. den Blasformträger 16. Das Lösen der Verbindung erfolgt wiederum durch das Entnehmen der Form.

Die Figuren 3 und 4 zeigen schematische Detaildarstellungen von abgewandelten Ausführungsformen der in Figur 2 gezeigten Ausführungsform einer erfindungsgemäßen Vorrichtung 1. Dabei ist in Fig. 3 die Temperiereinrichtung 30 bzw. das elektrische Heizelement 32 in der Formträgerschale 18, und der elektrische Kontakt 36 an dem Blasformträger 16 angeordnet. Die Temperiereinrichtung 30 temperiert in der gezeigten Ausführungsform die Blasformeinrichtung lediglich mittelbar, indem sie die Formträgerschale 18 und über die Temperierung der Formträgerschale 18 eine Temperierung der Blasformeinrichtung 14 herbeiführt. Bei dieser Variante befinden sich damit die Heizstäbe in der Formträgerschale 18. Hier ist das Herstellen bzw. Lösen einer elektrischen Verbindung 34 durch An- und Abstecken eines Steckers außerhalb der Form bzw. der Blasformeinrichtung 14 möglich. Der Stecker kann dabei eine elektrische Verbindung 34, sowie einen Vor- und/oder Rücklauf für ein zusätzliches Kühlmedium umfassen.

In Figur 4 ist das elektrische Heizelement 32 der Temperiereinrichtung 30 wiederum in einer Blasformhälfte der Blasformeinrichtung 14 angeordnet. Der elektrische Kontakt 36, mit dem das elektrische Heizelement 32 über die elektrische Verbindung 34 verbindbar ist, ist in der gezeigten Ausführungsform auf der Oberseite der Formträgerschale 18 und damit außerhalb der Blasformeinrichtung 14 angeordnet. Dieser kann beispielsweise auch an dem, bevorzugt auf der Oberseite des, Blasformträger(s) 16 angeordnet sein (mit gepunkteten Linien eingezeichnet).

### Bezugszeichenliste

- 1: Vorrichtung
- 2: Transporteinrichtung
- 6: Basisträger
- 8: Blasstation
- 10: Kunststoffvorformling
- 12: Stationsträger
- 14: Blasformeinrichtung
- 16: Blasformträger
- 18: Formträgerschale
- 20: Kunststoffbehältnis
- 30: Temperiereinrichtung
- 32: elektrisches Heizelement
- 34: elektrische Verbindung
- 36: elektrischer Kontakt
- 40: Wechseleinrichtung
- D: Drehachse
- W: Wechselposition

## Patentansprüche

1. Vorrichtung (1) zum Umformen von Kunststoffvorformlingen (10) zu Kunststoffbehältnissen (20) mit einer Vielzahl von Blasstationen (8), wobei diese Blasstationen (8) jeweils eine Blasformeinrichtung (14) aufweisen, welche aus zwei Blasformhälften und einer Bodenform besteht und wobei die Blasformeinrichtung jeweils einen Hohlraum ausbildet, innerhalb dessen die Kunststoffvorformlinge (10) zu den Kunststoffbehältnissen (20) umformbar sind, und welche lösbar mittelbar oder unmittelbar an Blasformträgern (16) angeordnet ist, wobei jede Blasformeinrichtung (14) mindestens eine Temperiereinrichtung (30) mit wenigstens einem elektrischen Heizelement (32) zum wenigstens bereichsweisen Temperieren der Blasformeinrichtung (14) aufweist,
**dadurch gekennzeichnet, dass**
die Vorrichtung (1) wenigstens eine automatisch lösbare und/oder eine automatisch herstellbare elektrische Verbindung (34) zwischen wenigstens einem elektrischen Heizelement (32) und der Blasstation (8) aufweist, wobei die Vorrichtung (1) wenigstens eine Auslöseeinrichtung aufweist, die dazu geeignet und bestimmt ist, ein automatisches Lösen und/oder ein automatisches Herstellen einer elektrischen Verbindung zwischen dem wenigstens einen elektrischen Heizelement (32) und der Umformungsstation (8) zu bewirken, wobei als Auslöseeinrichtung wenigstens eine Wechseleinrichtung (40) vorgesehen ist, welche geeignet und dazu bestimmt ist, die vollständige Blasformeinrichtung (14) oder nur Teile der Blasformeinrichtung (14) zu wechseln.

2. Vorrichtung (1) nach Anspruch 1,
**dadurch gekennzeichnet, dass**
die Blasformeinrichtungen (14) bevorzugt über Formträgerschalen (18) an den Blasformträgern (16) angeordnet sind und/oder an jeder Blasformhälfte jeweils eine Verriegelungseinrichtung vorgesehen ist, welche die Blasformeinrichtung (14) lösbar an der Formträgerschale (18) oder an dem Blasformträger (16) befestigt.

3. Vorrichtung (1) nach Anspruch 1,
**dadurch gekennzeichnet, dass**
als Auslöseeinrichtung eine Wechseleinrichtung (40) vorgesehen ist, welche geeignet und dazu bestimmt ist, die vollständige Blasformeinrichtung (14) insbesondere automatisch zu wechseln, insbesondere von deren Blasformträger (16) zu entfernen und/oder eine Blasformeinrichtung (14) an den Blasformträgern (16) anzuordnen, wobei bevorzugt die Wechseleinrichtung (40) das Lösen und/oder das Herstellen der elektrischen Verbindung im Wesentlichen zeitgleich mit dem Wechsel wenigstens eines Teils der Blasformeinrichtung (14) vornimmt.

4. Vorrichtung (1) nach wenigstens einem der vorhergehenden Ansprüche,
**dadurch gekennzeichnet, dass**
die Blasformeinrichtung (14) in ihrer Gesamtheit entnommen und in einem Magazin abgelegt wird, wobei die Blasformhälften und die Bodenform in diesem Zustand lösbar aneinander befestigt sind.

5. Vorrichtung (1) nach einem der vorhergehenden Ansprüche,
**dadurch gekennzeichnet, dass**
die Wechseleinrichtung (40) mindestens eine Greifeinrichtung (52) zum Greifen der Blasformeinrichtung (14) aufweist, wobei die Greifeinrichtung (52) geeignet dazu ist, wahlweise eine vollständige Blasformeinrichtung (14) oder nur Teile der Blasformeinrichtung (14) zu wechseln, wobei bevorzugt das Lösen und/oder Herstellen der elektrischen Verbindung durch mindestens eine Greifeinrichtung (52) der Wechseleinrichtung (40) erfolgt.

6. Vorrichtung (1) nach wenigstens einem der vorangegangenen Ansprüche,
**dadurch gekennzeichnet, dass**
das Lösen und/oder das Herstellen der wenigstens einen elektrischen Verbindung durch automatisches Anheben und/oder Absenken der Blasformeinrichtung (14) erfolgt.

7. Vorrichtung (1) nach wenigstens einem der vorangegangenen Ansprüche,
**dadurch gekennzeichnet, dass**
das Lösen der wenigstens einen elektrischen Verbindung (34) durch das Entnehmen wenigstens eines Teils der Blasformeinrichtung (14) und/oder das Herstellen der wenigstens einen elektrischen Verbindung durch das Einsetzen wenigstens eines Teils einer Blasformeinrichtung (14) erfolgt.

8. Vorrichtung (1) nach wenigstens einem der vorangegangenen Ansprüche,
**dadurch gekennzeichnet, dass**
das Lösen der wenigstens einen elektrischen Verbindung (34) durch das An- und Abstecken eines, bevorzugt an und/oder außerhalb der Blasformeinrichtung (14) angeordneten, Steckelementes einer Steckverbindung erfolgt.

9. Vorrichtung (1) nach Anspruch 1,
**dadurch gekennzeichnet, dass**
die Auslöseeinrichtung wenigstens ein Element aufweist, das ausgewählt ist aus einer Gruppe, die ein Stellelement, einen Pneumatikzylinder, eine positionierbare Kurve oder Kombinationen hieraus enthält.

10. Vorrichtung (1) nach wenigstens einem der vorangegangenen Ansprüche,
**dadurch gekennzeichnet, dass**
die Vorrichtung (1) eine Konditioniereinrichtung zum thermischen Konditionieren und insbesondere zum Kühlen der Blasformeinrichtung (14) aufweist.

11. Vorrichtung (1) nach wenigstens einem der vorangegangenen Ansprüche,
**dadurch gekennzeichnet, dass**
die Vorrichtung (1) eine Temperaturmesseinrichtung zur Erfassung eines für die Temperatur der Blasformeinrichtung (14) charakteristischen Wertes aufweist.

12. Vorrichtung (1) nach wenigstens dem vorangegangenen Anspruch,
**dadurch gekennzeichnet, dass**
die Vorrichtung (1) eine Temperaturregelungseinrichtung zum Regeln der Temperatur unter Berücksichtigung des von der Temperaturmesseinrichtung erfassten Wertes aufweist.

13. Verfahren zum Wechseln von einer Blasformeinrichtung (14) einer Blasstation (8) einer Vorrichtung (1) zum Umformen von Kunststoffvorformlingen (10) zu Kunststoffbehältnissen (20), wobei die Blasformeinrichtung (14) aus zwei Blasformhälften und einer Bodenform besteht und die Blasformeinrichtung (14) einen Hohlraum ausbildet, innerhalb dessen die Kunststoffvorformlinge (10) zu den Kunststoffbehältnissen (20) umformbar sind, und wobei die Blasformeinrichtung (14) lösbar mittelbar oder unmittelbar an Blasformträgern (16) angeordnet ist, wobei mindestens eine Temperiereinrichtung (30) mit wenigstens einem elektrischen Heizelement (32) zum wenigstens bereichsweisen Temperieren der Blasformeinrichtung (14) vorgesehen ist,
**dadurch gekennzeichnet, dass**
wenigstens eine elektrische Verbindung (34) zwischen wenigstens einem elektrischen Heizelement (32) und der Blasstation (8) automatisch gelöst und/oder automatisch hergestellt wird, wobei eine Auslöseeinrichtung die elektrische Verbindung in einem Wechselbetriebsmodus der Vorrichtung automatisch löst und/oder herstellt, wobei als Auslöseeinrichtung wenigstens eine Wechseleinrichtung (40) vorgesehen ist, welche geeignet und dazu bestimmt ist, die vollständige Blasformeinrichtung (14) oder nur Teile der Blasformeinrichtung (14) zu wechseln.

## Claims

1. Apparatus (1) for transforming plastic preforms (10) into plastic containers (20) with a plurality of blow moulding stations (8), wherein these blow moulding stations (8) each have a blow moulding device (14) which consists of two blow mould halves and a base mould, and wherein the blow moulding device in each case forms a cavity inside which the plastic preforms (10) can be transformed to form the plastic containers (20), and which is releasably arranged indirectly or directly on blow mould supports (16), wherein each blow moulding device (14) has at least one temperature control device (30) with at least one electrical heating element (32) for temperature control of at least some regions of the blow moulding device (14),
**characterised in that**
the apparatus (1) has at least one electrical connection (34) which can be automatically released and/or automatically made between at least one electrical heating element (32) and the blow moulding station (8), wherein the apparatus (1) has at least one triggering device which is suitable and intended to produce an automatic releasing and/or an automatic making of an electrical connection between the at least one electrical heating element (32) and the transforming station (8), wherein as triggering device a changing device (40) is provided, which is suitable and intended to change the complete blow moulding device (14) or only parts of the blow moulding device (14).

2. Apparatus (1) according to claim 1,
**characterised in that**
the blow moulding devices (14) are preferably arranged on the blow mould supports (16) by means of mould support shells (18), and/or a respective latching device is provided on each blow mould half and fastens the blow moulding device (14) releasably to the mould support shell (18) or to the blow mould support (16).

3. Apparatus (1) according to the preceding claim,
**characterised in that**
as triggering device a changing device (40) is provided, which is suitable and intended to change the complete blow moulding device (14) in particular automatically, in particular to remove it from the blow mould support (16) and/or to arrange a blow moulding device (14) on the blow mould supports (16), wherein the changing device (40) carries out the releasing and/or the making of the electrical connection substantially concurrently with the changing of at least a part of the blow moulding device (14).

4. Apparatus (1) according to at least one of the preceding claims,
**characterised in that**
the blow moulding device (14) is removed in its entirety and placed in a magazine, wherein the blow mould halves and the base mould in this state are releasably fastened to one another.

5. Apparatus (1) according to one of the preceding claims,
**characterised in that**
the changing device (40) has at least one gripping device (52) for gripping the blow moulding device (14), wherein the gripping device (52) is suitable for selectively changing a complete blow moulding device (14) or only parts of the blow moulding device (14), wherein the releasing and/or making of the electrical connection preferably takes place by at least one gripping device (52) of the changing device (40).

6. Apparatus (1) according to at least one of the preceding claims,
**characterised in that**
the releasing and/or making of the at least one electrical connection take place by automatic lifting and/or lowering of the blow moulding device (14).

7. Apparatus (1) according to at least one of the preceding claims,
**characterised in that**
the releasing of the at least one electrical connection (34) takes place by the removal of at least a part of the blow moulding device (14) and/or the making of the at least one electrical connection by the insertion of at least a part of a blow moulding device (14).

8. Apparatus (1) according to at last one of the preceding claims,
**characterised in that**
the releasing of the at least one electrical connection (34) takes place by the insertion and removal of a plug element of a plug connection preferably arranged on and/or outside the blow moulding device (14).

9. Apparatus (1) according to claim 1,
**characterised in that**
the triggering device has at least one element which is selected from a group including an adjustment element, a pneumatic cylinder, a positionable cam or combinations thereof.

10. Apparatus (1) according to at least one of the preceding claims,
**characterised in that**
the apparatus (1) has a conditioning device for thermal conditioning and in particular for cooling of the blow moulding device (14).

11. Apparatus (1) according to at least one of the preceding claims,
**characterised in that**
the apparatus (1) has a temperature measuring device for detecting a value which is characteristic for the temperature of the blow moulding device (14).

12. Apparatus (1) according to at least the preceding claim,
**characterised in that**
the apparatus (1) has a temperature control device for regulating the temperature with regard to the value detected by the temperature measuring device.

13. Method for changing a blow moulding device (14) of a blow moulding station (8) of an apparatus (1) for transforming plastic preforms (10) into plastic containers (20), wherein the blow moulding device (16) is formed of two blow mould halves and a base mould and the blow moulding device (14) forms a cavity inside which the plastic preforms (10) can be transformed to form the plastic containers (20), and wherein the blow moulding device (14) is arranged releasably indirectly or directly on blow mould supports (16), wherein at least one temperature control device (30) with at least one electrical heating element (32) for temperature control of at least some regions of the blow moulding device (14) is provided,
**characterised in that**
at least one electrical connection (34) between at least one electrical heating element (32) and the blow moulding station (8) is automatically released and/or automatically made, wherein a triggering device automatically makes or releases the electrical connection in a in a changing mode of the apparatus, wherein as triggering device at least one changing device (40) is provided, which is suitable and intended to change the complete blow moulding device (14) or only parts of the blow moulding device (14).

## Revendications

1. Dispositif (1) de mise en forme de préformes en matière plastique (10) en des récipients en matière plastique (20) avec une pluralité de postes de soufflage (8), dans lequel lesdits postes de soufflage (8) présentent respectivement un système de moulage par soufflage (14), lequel est constitué de deux moitiés de moule de soufflage et d'un moule de fond et dans lequel le système de moulage par soufflage réalise respectivement une cavité, à l'intérieur de laquelle les préformes en matière plastique (10) peuvent être mises en forme en les récipients en matière plastique (20) et laquelle est disposée de manière amovible indirectement ou directement sur des supports de moule de soufflage (16), dans lequel chaque système de moulage par soufflage (14) présente au moins un système de thermorégulation (30) avec au moins un élément de chauffage électrique (32) pour thermoréguler au moins par endroits le système de moulage par soufflage (14),
**caractérisé en ce que**
le dispositif (1) présente au moins une liaison électrique (34) pouvant être détachée automatiquement et/ou pouvant être établie automatiquement entre au moins un élément de chauffage électrique (32) et le poste de soufflage (8), dans lequel le dispositif (1) présente au moins un système de déclenchement qui est adapté pour et se destine à entraîner un détachement automatique et/ou un établissement automatique d'une liaison électrique entre l'au moins un élément de chauffage électrique (32) et le poste de mise en forme (8), dans lequel est prévu en tant que système de déclenchement au moins un système de changement (40), lequel est adapté pour et se destine à changer la totalité du système de moulage par soufflage (14) ou seulement des parties du système de moulage par soufflage (14).

2. Dispositif (1) selon la revendication 1,
**caractérisé en ce que**
les systèmes de moulage par soufflage (14) sont disposés sur les supports de moule de soufflage (16) de manière préférée par l'intermédiaire de coques de support de moule (18) et/ou est prévu sur chaque moitié de moule de soufflage respectivement un système de verrouillage, lequel fixe le système de moulage par soufflage (14) de manière détachable sur la coque de support de moule (18) ou sur le support de moule de soufflage (16).

3. Dispositif (1) selon la revendication 1,
**caractérisé en ce que**
est prévu en tant que système de déclenchement un système de changement (40), lequel est adapté pour et se destine à changer en particulier automatiquement la totalité du système de moulage par soufflage (14), en particulier à le retirer de ses supports de moule de soufflage (16), et/ou disposer un système de moulage par soufflage (14) sur les supports de moule de soufflage (16), dans lequel de manière préférée le système de changement (40) réalise le détachement et/ou l'établissement de la liaison électrique sensiblement dans le même temps avec le changement d'au moins une partie du système de moulage par soufflage (14).

4. Dispositif (1) selon au moins l'une quelconque des revendications précédentes,
**caractérisé en ce que**
le système de moulage par soufflage (14) est retiré dans sa totalité et est déposé dans un magasin, dans lequel les moitiés de moule de soufflage et le moule de fond sont fixés les uns sur les autres de manière détachable dans cet état.

5. Dispositif (1) selon l'une quelconque des revendications précédentes,
**caractérisé en ce que**
le système de changement (40) présente au moins un système de préhension (52) pour saisir le système de moulage par soufflage (14), dans lequel le système de préhension (52) est adapté pour changer au choix la totalité d'un système de moulage par soufflage (14) ou seulement des parties du système de moulage par soufflage (14), dans lequel de manière préférée le détachement et/ou l'établissement de la liaison électrique sont effectués par au moins un système de préhension (52) du système de changement (40).

6. Dispositif (1) selon au moins l'une quelconque des revendications précédentes,
**caractérisé en ce que**
le détachement et/ou l'établissement de l'au moins une liaison électrique sont effectués par relevage et/ou abaissement automatique du système de moulage par soufflage (14).

7. Dispositif (1) selon au moins l'une quelconque des revendications précédentes,
**caractérisé en ce que**
le détachement de l'au moins une liaison électrique (34) est effectué par le retrait d'au moins une partie du système de moulage par soufflage (14) et/ou l'établissement de l'au moins une liaison électrique est effectué par l'insertion d'au moins une partie d'un système de moulage par soufflage (14).

8. Dispositif (1) selon au moins l'une quelconque des revendications précédentes,
**caractérisé en ce que**
le détachement de l'au moins une liaison électrique (34) est effectué par le branchement et le débranchement d'un élément d'enfichage, disposé de manière préférée sur et/ou à l'extérieur du système de moulage par soufflage (14), d'une liaison par enfichage.

9. Dispositif (1) selon la revendication 1,
**caractérisé en ce que**
le système de déclenchement présente au moins un élément, qui est choisi parmi un groupe qui contient un élément de réglage, un cylindre pneumatique, une came positionnable ou des combinaisons de ceux-ci.

10. Dispositif (1) selon au moins l'une quelconque des revendications précédentes,
**caractérisé en ce que**
le dispositif (1) présente un système de conditionnement pour le conditionnement thermique et en particulier pour le refroidissement du système de moulage par soufflage (14).

11. Dispositif (1) selon au moins l'une quelconque des revendications précédentes,
**caractérisé en ce que**
le dispositif (1) présente un système de mesure de température pour détecter une valeur caractéristique de la température du système de moulage par soufflage (14).

12. Dispositif (1) selon au moins l'une quelconque des revendications précédentes,
**caractérisé en ce que**
le dispositif (1) présente un système de régulation de température pour réguler la température en tenant compte de la valeur détectée par le système de mesure de température.

13. Procédé pour changer un système de moulage par soufflage (14) d'un poste de soufflage (8) d'un dispositif (1) pour mettre en forme des préformes en matière plastique (10) en des récipients en matière plastique (20), dans lequel le système de moulage par soufflage (14) est constitué de deux moitiés de moule de soufflage et d'un moule de fond et le système de moulage par soufflage (14) réalise une cavité, à l'intérieur de laquelle les préformes en matière plastique (10) peuvent être mises en forme en les récipients en matière plastique (20), et dans lequel le système de moulage par soufflage (14) est disposé de manière détachable indirectement ou directement sur des supports de moule de soufflage (16), dans lequel au moins un système de thermorégulation (30) est prévu avec au moins un élément de chauffage électrique (32) pour thermoréguler au moins par endroits le système de moulage par soufflage (14),
**caractérisé en ce que**
au moins une liaison électrique (34) est détachée automatiquement et/ou est établie automatiquement entre au moins un élément de chauffage électrique (32) et le poste de soufflage (8), dans lequel un système de déclenchement détache et/ou établit automatiquement la liaison électrique dans un mode de fonctionnement de changement du dispositif, dans lequel est prévu en tant que système de déclenchement au moins un système de changement (40), lequel est adapté pour et se destine à changer la totalité du système de moulage par soufflage (14) ou seulement des parties du système de moulage par soufflage (14).
